# EUROPÄISCHE PATENTSCHRIFT

(11) **EP 0 687 776 B1**
(45) Veröffentlichungstag und Bekanntmachung des Hinweises auf die Patenterteilung: **10.03.1999**
(21) Anmeldenummer: 95108716.2
(22) Anmeldetag: 07.06.1995
(51) Int. Cl.: E01H 10/00, E01C 19/20

(54) **Winterdienst-Streugerät mit hydromotorischen Antrieben**
Winter service spreading device with hydraulic transmissions
Appareil de répandage pour service d'hiver avec transmission par moteurs hydrauliques

(30) Priorität: 18.06.1994 DE 9409934 U
(43) Veröffentlichungstag der Anmeldung: 20.12.1995
(73) Patentinhaber: Küpper-Weisser GmbH, D-78199 Bräunlingen (DE)
(72) Erfinder: Rosenstihl, Paul, Dipl.-Ing. (FH), D-78199 Bräunlingen (DE)
(74) Vertreter: Neymeyer, Franz, Dipl.-Ing. (FH)

(56) Entgegenhaltungen:
- DE-C- 4 038 268
- FR-A- 2 661 201

## Beschreibung

Die Erfindung betrifft ein Winterdienst-Streugerät mit einem durch einen Hydraulikmotor angetriebenen Endlosförderer, von dem granuliertes Streugut dosiert aus einem Streugutbehälter einer Streuvorrichtung zugeführt wird, welche einen ebenfalls von einem Hydraulikmotor angetriebenen Streugutverteiler, insbesondere einen um eine im wesentlichen vertikale Achse rotierenden Streuteller, aufweist, wobei die Hydraulikmotoren über Hydraulikleitungen mit einer hydraulischen Steuereinheit verbunden sind, welche einen Verteilerblock aufweist, der mit je einem Hydraulikmotor zugeordneten Mengenregelventilen bestückt ist und der einerseits an eine Hydraulikpumpe und andererseits an einen Druckmittelbehälter angeschlossen ist.

Winterdienst-Streugeräte der gattungsgemäßen Art werden gewöhnlich auf den Ladepritschen von Lastkraftfahrzeugen mitgeführt. Sie sind in der Regel mit eigenen Antriebsmotoren und Steuerungen versehen, mit denen zur Erzielung konstanter, auf bestimmte Werte einstellbarer Streudichten fahrgeschwindigkeitsproportionale Fördermengen ihrer Endlosförderer, bzw. zur Erzielung unterschiedlich einstellbarer Streubreiten unterschiedliche Drehzahlen ihrer Streuteller einstellbar sind.

Es sind sowohl Winterdienst-Streugeräte bekannt, bei denen als Endlosförderer Förderschnecken vorgesehen sind, als auch solche, die als Endlosförderer ein endloses Förderband oder eine Förderkette aufweisen. Diese Endlosförderer sind jeweils im unteren Bereich eines Streugutbehälters in dessen Längsrichtung verlaufend angeordnet, so daß das Streugut aus dem Streugutbehälter in dessen gewöhnlich mit der Fahrzeuglängsachse zusammenfallenden Längsachse entgegen der Fahrtrichtung nach hinten zu der an der Fahrzeugrückseite angeordneten Streuvorrichtung befördert wird. (DE-PS 1 534 421, DE-OS 21 24 416, US-PS 3 583 646, DE-A-26 32 794, DE-OS 28 30 056, CH-PS 453 410, FR-PS 2 229 812)

Während bei den meisten Winderdienst-Streugeräten der gattungsgemäßen Art, die als Endlosförderer eine Förderschnecke aufweisen, deren hydraulischer Antriebsmotor an der in Fahrtrichtung vorne liegenden Stirnseite des Streugutbehälters angeordnet ist, so wie etwa in DE-C-40 38 268, ist aus DE-OS 2 124 416 eine mobile Streuanlage bekannt, bei der mehrere Förderschnecken vorgesehen sind deren hydraulische Antriebsmotoren sich jeweils an dem in Fahrtrichtung hinten liegenden Ende der Förderschnecke befinden. Wo bei dieser Streuanlage die Hydraulikpumpe und die hydraulischen Steuereinrichtungen angeordnet sind, geht aus der Druckschrift nicht hervor.

Die für die Druckmittelversorgung aller Hydraulikmotoren eines gattungsgemäßen Winterdienst-Streugerätes benötigten Antriebs- und Steuereinheiten sind bei den bekannten Geräten gewöhnlich seitlich neben dem sich von oben nach unten trichterartig verjüngenden Streugutbehälter etwa in dessen Längsmitte angeordnet, wie es beispielsweise aus DE-PS 1534 421, DE-PS 26 32 794 und FR-PS 2 229 812 ersichtlich ist. Bei Geräten der neueren Generation werden zur Steuerung bzw. Regelung der Hydraulischen Antriebsmotoren elektrisch steuerbare Proportionalventile verwendet, die an einem gemeinsamen Verteilerblock befestigt sind. Dieser Verteilerblock weist die erforderliche Anzahl von Anschlüssen und Kanälen auf, durch welche die Ölversorgung der einzelnen Antriebsmotoren über die einzelnen Proportionalventile sowie über Rohr-oder Schlauchleitungen erfolgt. Er besteht gewöhnlich aus einem quaderförmigen Metallkörper, der aufgrund seiner Festigkeit zugleich als Träger für die Proportionalventile und die Schlauch- bzw. Rohranschlußkupplungen dient und der z.B. auf einer Konsole eines Montagerahmens befestigt ist. Bei der bisher bevorzugten Anordnung dieser Verteilerblöcke seitlich in der Längsmitte des Streugutbehälters sind zu jedem hydraulischen Antriebsmotor zwei relativ lange Schlauch- oder Rohrleitungen erforderlich, die nicht nur hohe Anschaffungs- und Montagekosten verursachen, sondern auch hohe Energieverluste während des Arbeitsbetriebs.

Der Erfindung liegt die Aufgabe zugrunde, bei einem Winterdienst-Streugerät der eingangs genannten Art eine kostengünstigere und verlustärmer arbeitende Anordnung der hydraulischen Antriebs-und Steuerungsaggregate zu treffen.

Gelöst wird diese Aufgabe erfindungsgemäß dadurch, daß der Verteilerblock mit seinen Mengenregelventilen unmittelbar an einem im Bereich des abgabeseitigen Endes des Endlosförderers angeordneten Hydraulikmotor befestigt und hydraulisch direkt mit diesem verbunden ist.

Man erreicht durch diese Anordnung nicht nur wesentlich kürzere Abstände der einzelnen der Hydraulikmotoren vom Verteilerblock sondern auch den Wegfall einer Schlauch- oder Rohrverbindung vom Verteilerblock zu einem der Hydraulikmotoren und damit auch eine erhebliche Verringerung der hydraulischen Leistungsverluste.

Weitere vorteilhafte Ausgestaltungen der Erfindung sind Gegenstand der Schutzansprüche 2 bis 5.

Anhand des in der Zeichnung dargestellten Ausführungsbeispiels wird die Erfindung im folgenden näher erläutert. Es Zeigt :
- Fig. 1: ein Winterdienst-Streugerät in vereinfachter Seitenansicht;
- Fig. 2: den hinteren Teil des Winterdienst-Streugerätes aus Fig. 1 in teilweise geschnittener Seitenansicht;
- Fig. 3: eine Rückansicht III des Hydraulikmotors des Endlosförderers und
- Fig. 4: eine Draufsicht IV aus Fig. 3.

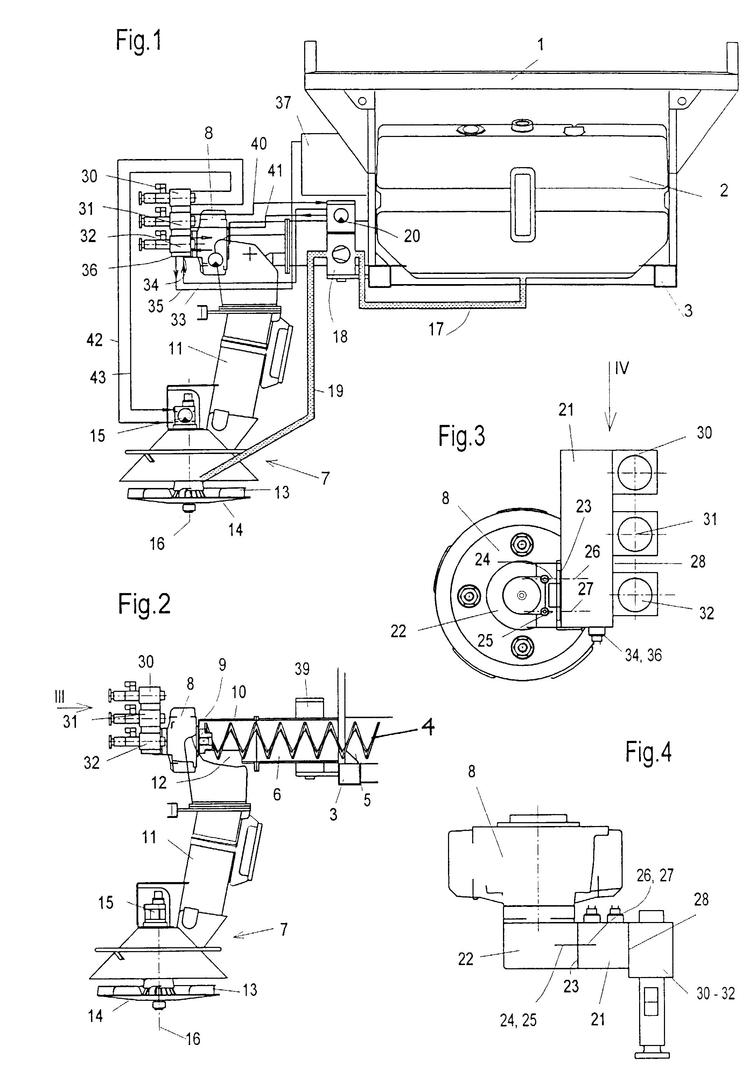

Bei dem in Fig. 1 dargestellten Winterdienst-Streugerät, das im folgenden kurz "Gerät" genannt ist, befindet sich an einer Längsseite eines wie üblich rechteckigen, trichterartig ausgebildeten Streugutbehälter 1 ein Flüssigkeitsbehälter 2, in dem Befeuchtungsflüssigkeit oder Tauflüssigkeit mitgeführt wird. Mittels eines Standrahmens 3 kann das Gerät auf der Ladepritsche eines Lastkraftwagen ( LKW) mitgeführt werden, um winterliche Straßen mit granuliertem, ggf. mit der Befeuchtungsflüssigkeit oder der Tauflüssigkeit angefeuchteten Streugut oder nur mit der Tauflüssigkeit zu bestreuen.

Das granulierte Streugut wird dabei in fahrgeschwindigkeitsproportionalen Mengen dosiert mittels einer Förderschnecke 4, die in einer U-förmigen Fördermulde 5 des Streugutbehälters 1 in üblicher Weise angeordnet ist, durch ein horizontales, sich in Längsrichtung an die Fördermulde 5 nach hinten anschließendes Förderrohr 6 in eine am Ende dieses Förderrohres 6 angeordnete Streuvorrichtung 7 befördert. Angetrieben wird diese Förderschnecke 4 durch einen an ihrem abgabeseitigen Ende angeordneten Hydraulikmotor 8, der außenseitig an der hinteren Stirnwand 9 eines angeflanschten Rohrstutzens 10 befestigt ist, welcher eine koaxiale Verlängerung des Förderrohrs 6 bildet und an dem ein mehrteiliges Fallrohr 11 der Streueinrichtung befestigt ist. Außerdem weist dieser Rohrstutzen 10 unterseitig eine Öffnung 12 auf, durch welche das Streugut in das Fallrohr 11 fällt.

Am unteren Ende des Fallrohres 11 befindet sich ein runder, mit Wurfschaufeln 13 versehener Streuteller 14, der um eine vertikale Drehachse 16 drehend von einem weiteren Hydraulikmotor 15 ebenfalls geregelt angetrieben wird. Dieser Hydraulikmotor 15 des Streutellers 14 ist in einem etwa der Höhe des Fallrohrs entsprechenden und somit geringen räumlichen Abstand vom Hydraulikmotor 8 der Förderschnecke 4 unter diesem angeordnet.

Der Flüssigkeitsbehälter 2 ist über eine Flüssigkeitsleitung 17 mit einer Flüssigkeitspumpe 18 verbunden, von der eine Zuführleitung 19 zum Streuteller 14 führt. Diese Flüssigkeitspumpe 18 wird von einem direkt mit ihr verbundenen Hydraulikmotor 20 angetrieben.

Die Füssigkeitspumpe 18 und ihr Hydraulikmotor 20 sind als Montageeinheit an der Rückseite des Streugutbehälters 1 angeordnet.

Alle drei Hydraulikmotoren 8, 15, 20 stehen hydraulisch mit einem Verteilerblock 21 in Verbindung, der unmittelbar an einer seitlichen, vertikalen Anflanschfläche 23 des Steuerdeckels 22 des Hydraulikmotors 8 so angeschraubt ist, daß dessen Hydraulikanschlüsse 24 und 25 direkt mit den diesen zugeordneten Kanälen 26, 27 des Verteilerblocks 21 in Verbindung stehen.

Auf der dem Steuerdeckel 22 des Hydraulikmotors 8 gegenüberliegenden Vertikal fläche 28 sind übereinander drei elektrisch steuerbare Proportionalventile 30 31 und 32 angeordnet, die jeweils von einer nicht dargestellten an sich jedoch bekannten elektronischen Steuereinrichtung separat gesteuert werden und die ihrerseits die Druckmittelströme zu den einzelnen Hydraulikmotoren 8, 15 und 20 und somit deren Drehzahlen steuern.

Erzeugt werden die Druckmittelströme von einer Hydraulikpumpe 39 (Fig. 2), die auf der dem Flüssigkeitsbehälter 2 gegenüberliegenden Seite des Streugutbehälters 1 angeordnet sein kann, vorzugsweise jedoch an dessen Rückseite angeordnet ist und von einem nicht dargestellten Verbrennungsmotor konstant angetrieben wird. Diese Hydraulikpumpe 39 steht über eine Druckleitung 33 und einen unterseitigen Anschluß 34 mit dem Verteilerblock 21 in Verbindung, dessen Rücklaufleitung 35 an einem ebenfalls unterseitigen Anschluß 36 angeschlossen ist und in einen Druckmittelbehälter 37 führt, der zweckmäßig an der Rückseite des Streugutbehälters 1 angeordnet ist, um vom Verteilerblock 21 am Hydraulikmotor 8 der Förderschnecke 4 einen möglichst kleinen räumlichen Abstand zu erhalten und nur kurze Verbindungsleitungen zu benötigen.

Der Hydraulikmotor 20 der Flüssigkeitspumpe 18 ist durch eine Druckleitung 40 und eine Rücklaufleitung 41 mit dem Verteilerblock 21 bzw. mit dem Proportionalventil 31 verbunden, wobei die Leitungen 40 und 41 vorzugsweise aus flexiblen Schläuchen bestehen und wegen der räumlichen Nähe der Hydraulikpumpe 20 zum Verteilerblock 21 eine nur minimale Länge aufweisen können.

Der Hydraulikmotor 15 des Streutellers 14 steht durch eine Druckleitung 42 und eine Rücklaufleitung 43 mit dem Verteilerblock 21 bzw. mit dem Proportionalventil 30 in Verbindung, wobei auch diese Leitungen 42 und 43 aus Flexiblen Schläuchen bestehen, die anders als in Fig. schematisch dargestellt, auf einem möglichst kurzen Weg zwischen Verteilerblock 21 und Hydraulikmotor 15 verlegt sind.

Obwohl es bei der im Ausführungsbeispiel gegebenen Anordnung am vorteilhaftesten ist, den Verteilerblock 21 am Hydraulikmotor 8 der Förderschnecke 4 anzubringen, wäre es auch ohne weiteres möglich, diesen Verteilerblock 21 am Hydraulikmotor 20 der Flüssigkeitspumpe 18 zu befestigen. Gegenüber den bekannten Anordnungen hätte auch diese Lösung noch erhebliche Vorteile.

## Patentansprüche

1. Winterdienst-Streugerät mit einem durch einen Hydraulikmotor (8) angetriebenen Endlosförderer (4), von dem granuliertes Streugut dosiert aus einem Streugutbehälter (1) einer Streuvorrichtung (7) zugeführt wird, welche einen ebenfalls von einem Hydraulikmotor (15) angetriebenen Streugutverteiler, insbesondere einen um eine im wesentlichen vertikale Achse (16) rotierenden Streuteller (14), aufweist, wobei die Hydraulikmotoren (8, 14) über Hydraulikleitungen mit einer hydraulischen Steuereinheit verbunden sind, welche einen Verteilerblock (21) aufweist, der mit je einem Hydraulikmotor (8, 15) zugeordneten Mengenregelventilen (30, 31, 32) bestückt ist und der einerseits an eine Hydraulikpumpe (39) und andererseits an einen Druckmittelbehälter (37) angeschlossen ist,
**dadurch gekennzeichnet,**
daß der Verteilerblock (21) mit seinen Mengenregelventilen (30, 31, 32) unmittelbar an einem im Bereich des abgabeseitigen Endes des Endlosförderers (4) angeordneten Hydraulikmotor (8) befestigt und hydraulisch direkt mit diesem verbunden ist.

2. Winterdienst-Streugerät nach Anspruch 1, dadurch gekennzeichnet, daß der Verteilerblock (21) unmittelbar an dem Hydraulikmotor (8) des Endlosförderers (4) befestigt ist, wobei dieser Hydraulikmotor (8) am abgabeseitigen Ende des Endlosförderers (4) angeordnet ist.

3. Winterdienst-Streugerät nach Anspruch 1 oder 2, dadurch gekennzeichnet, daß der Verteilerblock (21) mit drei elektrisch separat ansteuerbaren Mengenregelventilen (30, 31, 32) bestückt ist, die jeweils unabhängig voneinander die Hydraulikmotoren (8, 15, 20) des Endlosförderers (4), des Streugutverteilers (14) und einer Förderpumpe (18) für Befeuchtungsflüssigkeit steuern, welche über Schlauch- oder Rohrleitungen (40,41, 42, 43) mit dem Verteilerblock (21) verbunden sind.

4. Winterdienst-Streugerät nach Anspruch 1, dadurch gekennzeichnet, daß der Druckmittelbehälter (37) im Bereich des abgabeseitigen Endes des Endlosförderers (4) bzw. an der Rückseite des Streugutbehälters (1) angeordnet ist.

5. Winterdienst-Streugerät nach Anspruch 3, dadurch gekennzeichnet, daß die Flüssigkeitspumpe (18) mit ihrem Hydraulikmotor (20) im Bereich des abgabeseitigen Endes des Endlosförderers (4) angeordnet ist.

## Claims

1. Winter road gritting device with a continuous conveyor (4) driven by a hydraulic motor (8), by which granulated grit is supplied metered from a grit container (1) to a gritting device (7), which comprises a grit spreader also driven by a hydraulic motor (15), in particular a gritting plate (14) rotating about a substantially vertical axis (16), whereby the hydraulic motors (8, 14) are connected by hydraulic lines to a hydraulic control unit, which comprises a spreader unit (21), which is equipped with metering valves (30, 31, 32) each assigned to a hydraulic motor (8, 15), and which is connected on the one hand to a hydraulic pump (39) and on the other hand to a pressure container (37),
characterised in that
the spreader unit (21) with its metering valves (30, 31, 32) is secured directly to a hydraulic motor (8) arranged in the region of the outlet side end of the continuous conveyor (4) and connected hydraulically directly to the latter.

2. Winter road gritting device according to claim 1, characterised in that the spreader unit (21) is secured directly to the hydraulic motor (8) of the continuous conveyor (4), whereby the said hydraulic motor (8) is arranged at the outlet-side end of the continuous conveyor (4).

3. Winter road gritting device according to claim 1 or 2, characterised in that the spreader unit (21) is equipped with three electrically separately controlled metering valves (30, 31, 32), which independently of one another control the hydraulic motors (8, 15, 20) of the continuous conveyor (4) of the grit spreader (14) and a conveyor pump (18) for moistening liquid, which are connected by hose or tube lines (40, 41, 42, 43) to the spreader unit (21).

4. Winter road gritting device according to claim 1, characterised in that the pressure means container (37) is arranged in the region of the outlet-side end of the continuous conveyor (4) or the rear side of the grit container (1).

5. Winter road gritting device according to claim 3, characterised in that the liquid pump (18) with its hydraulic motor (20) is arranged in the region of the outlet-side end of the continuous conveyor (4).

## Revendications

1. Appareil de répandage pour service d'hiver, comportant un transporteur sans fin (4) qui est entraîné par un moteur hydraulique (8) et conduit de manière dosée de la matière granulée à répandre d'un réservoir de cette matière (1) à un dispositif de répandage (7) qui présente un distributeur de matière à répandre également entraîné par un moteur hydraulique (15), en particulier un disque répandeur (14) tournant autour d'un axe sensiblement vertical (16), les moteurs hydrauliques (8, 14) étant reliés par des conduites hydrauliques à un bloc de commande hydraulique qui présente un bloc de distribution (21) qui est pourvu de vannes de réglage de débit (30, 31, 32) associées chacune à un moteur hydraulique (8, 15) et est relié d'une part à une pompe hydraulique (39) et d'autre part à un réservoir de fluide hydraulique (37),
caractérisé par le fait
que le bloc de distribution (21) est fixé directement avec ses vannes de réglage de débit (30, 31, 32) à un moteur hydraulique (8) placé dans la zone de l'extrémité de sortie du transporteur sans fin (4) et est relié hydrauliquement directement à ce moteur.

2. Appareil de répandage pour service d'hiver selon la revendication 1, caractérisé par le fait que le bloc de distribution (21) est fixé directement au moteur hydraulique (8) du transporteur sans fin (4), et ce moteur hydraulique (8) est placé à l'extrémité de sortie du transporteur sans fin (4).

3. Appareil de répandage pour service d'hiver selon l'une des revendications 1 et 2, caractérisé par le fait que le bloc de distribution (21) est équipé de trois vannes de réglage de débit à commande électrique séparée (30, 31, 32) qui commandent indépendamment les unes des autres les moteurs hydrauliques (8, 15, 20) du transporteur sans fin (4), du distributeur de matière à répandre (14) et d'une pompe de circulation (18) pour liquide d'humidification, qui sont reliés au bloc de distribution (21) par des conduites souples ou rigides (40, 41, 42, 43).

4. Appareil de répandage pour service d'hiver selon la revendication 1, caractérisé par le fait que le réservoir de fluide hydraulique (37) est placé dans la zone de l'extrémité de sortie du transporteur sans fin (4) ou sur le côté arrière du réservoir de matière à répandre (1).

5. Appareil de répandage pour service d'hiver selon la revendication 3, caractérisé par le fait que la pompe à liquide (18) est placée avec son moteur hydraulique (20) dans la zone de l'extrémité de sortie du transporteur sans fin (4).
